# EUROPÄISCHE PATENTSCHRIFT

(11) **EP 2 153 080 B1**
(45) Veröffentlichungstag und Bekanntmachung des Hinweises auf die Patenterteilung: **22.08.2012**
(21) Anmeldenummer: 08749098.3
(22) Anmeldetag: 24.04.2008
(51) Int. Cl.: F16D 25/0638, F16D 25/10

(54) **DOPPELKUPPLUNGSANORDNUNG MIT KOLBENFÜHRUNGSELEMENT**
DUAL CLUTCH ARRANGEMENT HAVING A PISTON GUIDE ELEMENT
DISPOSITIF D'EMBRAYAGE DOUBLE AVEC ELEMENT DE GUIDAGE DE PISTON

(30) Priorität: 10.05.2007 DE 102007022422
(43) Veröffentlichungstag der Anmeldung: 17.02.2010
(73) Patentinhaber: BorgWarner Inc., Auburn Hills, MI 48326 (US)
(72) Erfinder: GERATHEWOHL, Rainer, 76149 Karlsruhe (DE); NICKLAS, Götz, 67354 Römerberg (DE); HAUCK, Hans Jürgen, 74523 Schwäbisch Hall (DE)
(74) Vertreter: Leckel, Ulf
(86) Internationale Anmeldenummer: PCT/EP2008/003299
(87) Internationale Veröffentlichungsnummer: WO 2008/138460

(56) Entgegenhaltungen:
- EP-A- 0 628 741
- EP-A- 1 610 021
- EP-A- 1 612 444
- WO-A-01/42673
- US-A1- 2005 279 605

## Beschreibung

Die Erfindung betrifft ein Kupplungssystem für Kraftfahrzeugantriebe mit einer Kupplungseingangswelle und mindestens einer Getriebeeingangswelle, wobei die Getriebeeingangswelle über eine im Getrieberaum gelegene mit Lamellenpaketen ausgestattete Reibkupplung mit der Kupplungseingangswelle verbunden ist und wobei mindestens ein Lamellenpaket über ein von einem Stellglied bewegbares Kraftübertragungselement zum Einkuppeln gegen einen Anschlag gepresst wird.

Aus der EP 0 758 434 B1 ist ein derartiges Kupplungssystem bekannt. Das System beschreibt eine Mehrfachlamellenkupplung mit mehreren Außenlamellenträgern, von denen jeder eine - in axialer Richtung gemessene - Breite hat, die mehr als doppelt so breit ist wie die Breite des aufgenommenen Lamellenpaketes. Dadurch wird nicht nur in Kupplungslängsrichtung viel Bauraum benötigt, sondern die träge Masse der rotierenden Außenlamellenträger ist auch besonders groß, was sich negativ auf die Getriebedynamik auswirkt.

Die EP 1 610 021 A1 beschreibt eine Drehmomentübertragungseinrichtung mit einem Lamellenpaket, das durch einen Betätigungshebel gegen einen Anschlag gepresst werden kann. Der Betätigungshebel wirkt über ein Zwischenstück auf das Lamellenpaket, wobei das Zwischenstück Finger aufweist, die sich durch Ausnehmungen in einem Verbindungsteil erstrecken, um einerseits mit dem Betätigungshebel und andererseits mit dem Lamellenpaket zusammen zu wirken. Eine ähnliche Kupplungseinrichtung ist ferner aus der EP 1 612 444 A1 bekannt.

Die bekannten Kupplungseinrichtungen haben sich bewährt, sind jedoch insofern nachteilhaft, als dass deren Herstellung relativ aufwendig und deren Hystereseverhalten verbesserungswürdig ist.

Der vorliegenden Erfindung liegt die Aufgabe zugrunde, ein Kupplungssystem zu entwickeln, das bei mindestens einer Kupplung - bei verbesserter Dynamik - einen in axialer Richtung kurz bauenden Außenlamellenträger aufweist, wobei die Fertigung vereinfacht und das Hystereseverhalten verbessert sein soll.

Diese Aufgabe wird durch ein Kupplungssystem mit den Merkmalen des Anspruchs 1 oder 2 gelöst. Dazu hat mindestens ein Kupplungsbauteil der Reibkupplung im Bereich des entsprechenden Lamellenpaketes eine Vielzahl von Ausnehmungen. Zudem weist der Kraftübertragungsabschnitt des entsprechenden Stellgliedes eine Vielzahl von Fingern auf, die durch die Ausnehmungen hindurch auf das entsprechende Lamellenpaket wirken, wobei mindestens eine von einem Finger durchdrungene Ausnehmung eine Ausnehmungsverstärkung aufweist oder/und mindestens ein Finger in einem Bereich eine Ummantelung aufweist, der die entsprechende Ausnehmung durchdringt. Weiterbildungen sind jeweils Gegenstand abhängiger Ansprüche.

Bei bestimmten Anwendungsfällen ist es von vorteil, dass zur Betätigung eines Lamellenpaketes der entsprechende Kraftübertragungsabschnitt des betätigenden Stellglieds einer Kupplung durch ein weiteres Kupplungsbauteil hindurch greift. Hierzu kragen beispielsweise Finger oder gleichwirkende Bolzen, die am Kraftübertragungsteil angeordnet oder angeformt sind, über entsprechende Ausnehmungen in den Raum hinein, in dem sich das Lamellenpaket befindet. Die Finger berühren hierbei die Ausnehmungsränder zumindest bereichsweise. Dadurch wird u.a. gewährleistet, dass der Kraftübertragungsabschnitt synchron mit dem durchbrochenen Kupplungsbauteil umläuft.

Weitere Einzelheiten der Erfindung ergeben sich aus den Unteransprüchen und der nachfolgenden Beschreibung schematisch dargestellter Ausführungsformen:
- Fig. 1: Teillängsschnitt durch eine Doppelwellenkupplung;
- Fig. 2: Ausschnitt aus Figur 1;
- Fig. 2a: ein der Figur 2 entsprechender Ausschnitt aus einem anderen Ausführungsbeispiel einer erfindungsgemäßen Doppelwellenkupplung;
- Fig. 3: Teilansicht des Außenlamellenträgers mit geschnittenen Fingern des Kraftübertragungsabschnitts;
- Fig. 4: Teilabwicklung des Fingerbereichs und des Außenlamellenträgers mit Ausnehmungsverstärkung;
- Fig. 5: Längsschnitt durch eine Ausnehmungsverstärkung;
- Fig. 6: Längsschnitt, um 90° versetzt zu Figur 5;
- Fig. 7: Unteransicht einer Ausnehmungsverstärkung;
- Fig. 8: Teilabwicklung des Fingerbereichs und des Außenlamellenträgers mit Fingerummantelung;
- Fig. 9: Längsschnitt durch eine Fingerummantelung;
- Fig. 10: Längsschnitt, um 90° versetzt zu Figur 9;
- Fig. 11: Querschnitt einer Fingerummantelung;
- Fig. 12: Teilabwicklung des Fingerbereichs und des Außenlamellenträgers mit Fingerummantelung und Ausnehmungsverstärkung.

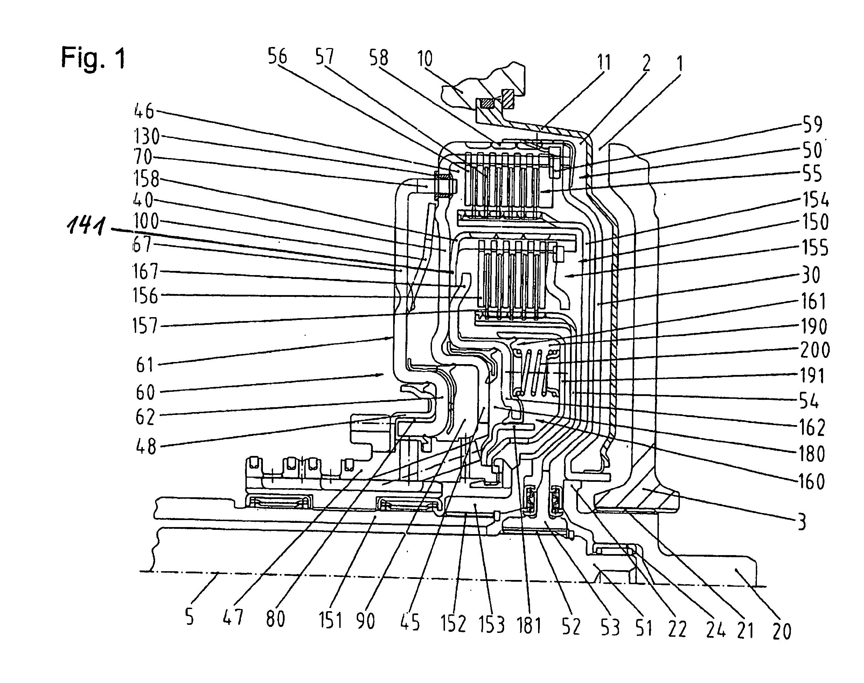

Figur 1 zeigt eine Doppelwellenkupplung mit zwei tauchgeschmierten Reibkupplungen 50, 150. Diese kraftschlüssigen Schaltkupplungen haben zwei radial hintereinander angeordnete Lamellenpakete 55, 155. Demnach sitzt das erste Lamellenpaket 55 auf einem größeren Radius als das zweite 155. Die beiden Kupplungen 50, 150 werden hydraulisch geschlossen. Das Lösen der einzelnen Kupplung 50, 150 erfolgt über Federelemente und/oder hydraulisch über entsprechende Zylinder-Kolben-Einheiten. Die Federelemente 100, 200 sind z.B. mechanische Federn wie Schraubenfedern und/oder Membranfedern. Dieses Kupplungssystem wird in der Regel in Personenkraftwagen eingesetzt.

Das Kupplungssystem sitzt beispielsweise zwischen einem mehrwelligen Schaltgetriebe und dem Antriebsmotor des Fahrzeugs. Der Antriebsmotor ist in der Regel ein Otto- oder Dieselmotor. Zwischen dem Antriebsmotor und dem Kupplungssystem ist oft eine Ein- oder Zweimassenkupplung 3 montiert.

Da das Kupplungssystem einen großen Durchmesser aufweist, ist es in dem Getriebegehäusebereich angeordnet, der als Gehäuseglocke 10 bezeichnet wird.

Das Motordrehmoment gelangt von der Kurbelwelle auf das Schwungrad 3, vgl. Figur 1. Letzteres sitzt über eine drehstarre Wellen-Naben-Verbindung 21 auf der Kupplungseingangswelle 20. Hinter der Wellen-Naben-Verbindung 21 verbreitert sich die Kupplungseingangswelle 20 zur Ausbildung eines Mitnehmerscheibensitzes 22. Auf dem Mitnehmerscheibensitz 22 ist die Mitnehmerscheibe 30 befestigt.

Die z.B. tiefgezogene Mitnehmerscheibe 30 ist mit einem ersten Außenlamellenträger 40 drehstarr verbunden, der wiederum mit einem zweiten Außenlamellenträger 140 drehstarr verbunden ist. Die Außenlamellenträger 40, 140 haben zwei ringförmige Lamellentragabschnitte 58 und 158. Der erste Außenlamellenträger 40, der beispielsweise ein im Stanz- und Tiefziehverfahren hergestelltes Blechteil ist, ist an einer Hauptnabe 47 befestigt. Die Kombination aus Kupplungseingangswelle 20, Mitnehmerscheibe 30, Außenlamellenträger 40, 140 und Hauptnabe 47 rotieren mit der Motordrehzahl. Diese Teile 20, 30, 40, 140, 47 befinden sich - bei dem Ausführungsbeispiel - im andauernden Eingriff mit der Kurbelwelle des Antriebsmotors.

Die Kupplungseingangswelle 20 hat eine zentrale Bohrung 24, in der wälzgelagert eine erste Getriebeeingangswelle 51 gelagert ist. Auf dieser Getriebeeingangswelle 51 ist über eine Wellen-Naben-Verbindung 52 ein erster Lamellenträgerflansch 53 angeordnet. Am Lamellenträgerflansch 53 ist ein erster topfförmiger Lamellenträger 54 angeschweißt. Zwischen dem ersten Lamellenträger 54 und dem äußeren Lamellentragabschnitt 58 des Außenlamellenträgers 40 sind die Lamellen 56, 57 der ersten Kupplung 50 angeordnet. Dabei greifen die Außenlamellen 56 formschlüssig in die Profilierung des äußeren Lamellentragabschnittes 58 ein. Die Außenlamellen 56 sind an diesem Lamellentragabschnitt 58 drehsteif aber längsverschieblich gelagert. Die zwischen den Außenlamellen 56 sitzenden Innenlamellen 57 sind auf vergleichbare Weise mit der Profilierung des ersten Innenlamellenträgers 54 verbunden.

Der erste Außenlamellenträger 40 bildet zusammen mit der Hauptnabe 47 einen Ringzylinder 45 aus. Nach Figur 1 ist nach links seitlich versetzt zum Ringzylinder 45 an der Hauptnabe 47 eine im Teilquerschnitt im Wesentlichen u-förmige Zylinderaußenwand 48 starr angeordnet. Zwischen der Zylinderaußenwand 48 und dem Ringzylinder 45 ist ein aus Tiefziehblech geformter, erster Ringkolben 61 angeordnet. Der Ringkolben 61 hat einen Kolbenabschnitt 62 und einen Kraftübertragungsabschnitt 67. Zwischen dem Kolbenabschnitt 62 und der Zylinderaußenwand 48 befindet sich ein erster Arbeitsraum 80.

Dieser Arbeitsraum 80 wird mit Drucköl beaufschlagt, um den Kraftübertragungsabschnitt 67 gegen das erste Lamellenpaket 55 zu pressen. Dazu greift der Kraftübertragungsabschnitt 67 über Finger 70 in den Innenraum 46 des ersten Außenlamellenträgers 40 ein. Bei betätigter erster Kupplung 50 pressen die Finger 70 das Lamellenpaket 55 gegen einen im ersten Außenlamellenträger 40 fixierten Anschlag 59. Im gekuppelten Zustand wird die Kupplungseingangswelle 20 über den ersten Außenlamellenträger 40 und den ersten Innenlamellenträger 54 mit der ersten Getriebeeingangswelle 51 verbunden. Eines der auf dieser Welle 51 angeordneten Gangräder kämmt dann kraftübertragend mit einem Gangrad auf der Getriebeausgangswelle. Die Gangräder und die Getriebeausgangswelle sind in Figur 1 nicht dargestellt.

Zwischen dem Kraftübertragungsabschnitt 67 und dem ersten Außenlamellenträger 40 sitzt als Rückstellelement eine Membranfeder 100. Sie löst bei einer Druckentlastung des ersten Arbeitsraumes 80 die Finger 68 vom ersten Lamellenpaket 55.

In der Hauptnabe 47 ist eine zweite Getriebeeingangswelle 151 z.B. über zwei Nadellager gelagert. Diese als Hohlwelle ausgebildete Getriebeeingangswelle 151 umgibt zumindest bereichsweise die erste Getriebeeingangswelle 51. Am vorderen - zur Kupplungseingangswelle 20 hin orientierten - Wellenende befindet sich eine Wellen-Naben-Verbindung 152, über die ein zweiter Lamellenträgerflansch 153 drehstarr auf der zweiten Getriebeeingangswelle 151 angeordnet ist. Auf dem Lamellenträgerflansch 153 ist der Innenlamellenträger 154 der zweiten Kupplung 150 befestigt.

Zwischen diesem zweiten Innenlamellenträger 154 und dem ersten Innenlamellenträger 54 ist ein innerer Lamellentragabschnitt 158 des zweiten Außenlamellenträgers 140 angeordnet. Er ist am ersten Außenlamellenträger 40 angeschweißt. Der zweite Innenlamellenträger 154 und der zweite Außenlamellenträger 140 fixieren das zweite Lamellenpaket 155 in bekannter Weise.

Innerhalb des Bauraumes des zweiten Innenlamellenträgers 154 ist eine an der Hauptnabe 47 befestigte Ausgleichsraumbegrenzungswandung 191 angeordnet. Die Begrenzungswandung 191 hat die Form eines einen zweiten Ausgleichsraum 190 auf drei Seiten umgebenden Ringkanals.

Zwischen dem Ausgleichsraum 190 und dem ersten Außenlamellenträger 40 ist ein zweiter Ringkolben 161 angeordnet. Der in einen Kolbenabschnitt 162 und einen Betätigungsabschnitt 167 aufgeteilte Ringkolben 161 drückt - beim Einkuppeln - mit dem Betätigungsabschnitt 167 auf das zweite Lamellenpaket 155.

Der Kolbenabschnitt 162 schließt einen zweiten Arbeitsraum 180 ab, der durch den ersten Außenlamellenträger 40 und einen Zylinderring 181 gebildet wird. Er ist hierbei gegenüber beiden Bauteilen 40, 181 mittels Lippendichtringen abgedichtet. Der Kolbenabschnitt 62 des ersten Ringkolbens 61 hat vergleichbare Dichtungen. Der Zylinderring 181 ist ebenfalls auf der Hauptnabe 47 befestigt. Der Ringkolben 161 ist auch gegenüber dem Ausgleichsraum 190 abgedichtet.

Wird die zweite Kupplung 150 betätigt, wird bei sich öffnender erster Kupplung 50 der zweite Außenlamellenträger 140 mit dem zweiten Innenlamellenträger 154 verbunden. Das Motordrehmoment wird somit auf die zweite Getriebeeingangswelle 151 übertragen. Entsprechende Gangräder leiten die Rotationsbewegung drehmomentverändert auf die nicht dargestellte, den Antriebsstrang antreibende Getriebeausgangswelle weiter.

Im zweiten Ausgleichsraum 190 sind eine Vielzahl von Federelementen 200, z.B. in Form von Schraubendruckfedern, angeordnet. Sie stützen sich zwischen dem zweiten Ringkolben 161 und der Begrenzungswandung 191 ab. U.a. über die Federelemente 200 wird der Ringkolben 161 beim Lösen der zweiten Kupplung 150 vom entsprechenden Lamellenpaket 155 abgehoben.

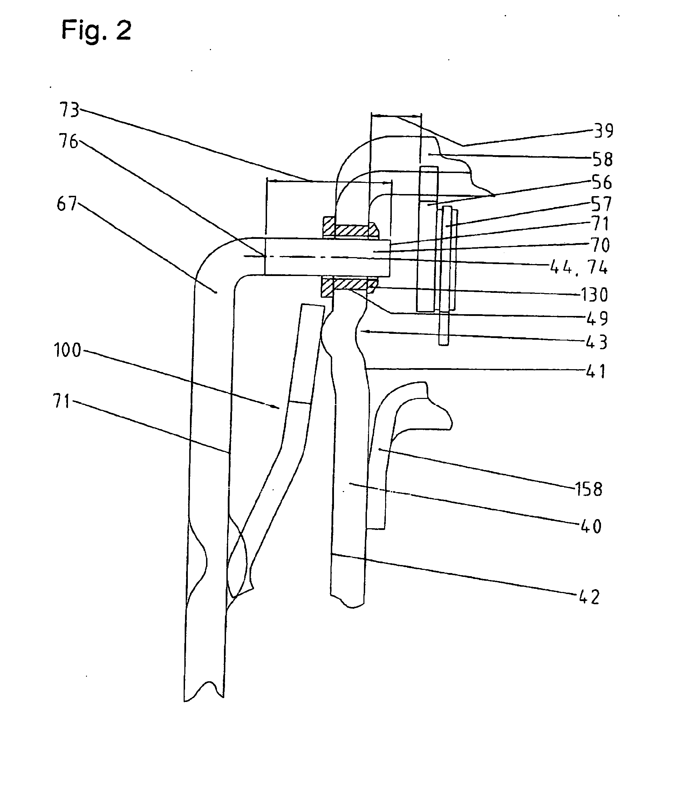

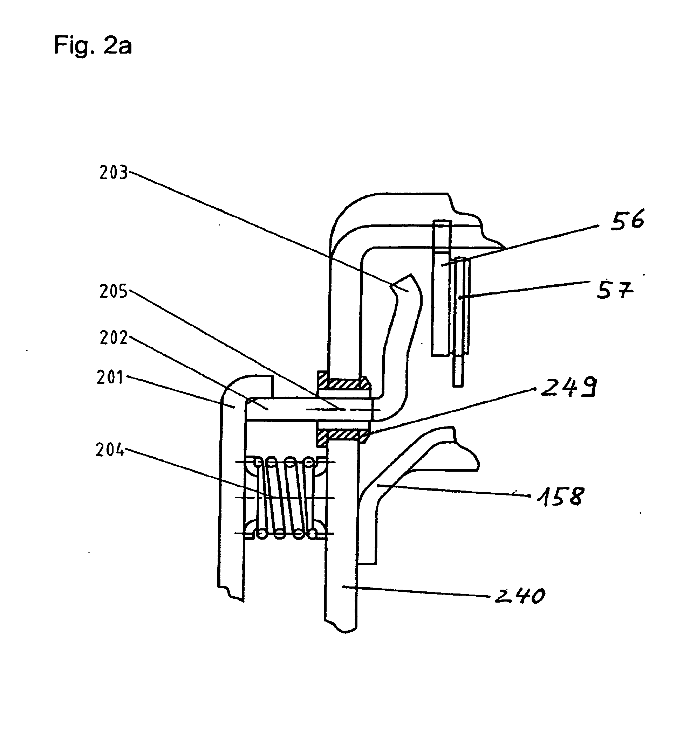

In Figur 2 ist ein Teil des Kraftübertragungsabschnitts 67 des Ringkolbens 61 zusammen mit einem Teil des ersten Außenlamellenträgers 40 vergrößert dargestellt. Der erste Außenlamellenträger 40 weist zwischen dem Lamellentragabschnitt 58 und der Sickenerhebung 43, an der sich die Membranfeder 100 abstützt, eine Ausnehmung 49 auf. Durch diese Ausnehmung 49 hindurch greift ein Finger 70, die Teil des Kraftübertragungsabschnitts 67 ist. Der Finger 70 hat ein freies Ende mit einer ebenen Fingerstirnfläche 71. Bei einer kuppelnden Betätigung des Stellglieds 50, vgl. Figur 1, legt sich die Fingerstirnfläche 71 an die erste Außenlamelle 56 an, hier nicht dargestellt. Konstruktionsbedingt ist hierbei der Abstand 39, der gemessen wird zwischen der weitgehend planen Innenwandung 41 des ersten Außenlamellenträgers 40 und der ersten Außenlamelle 56, gegenüber herkömmlichen Kupplungen derartiger Kupplungssysteme überdurchschnittlich kurz.

Der Finger 70 und die Ausnehmung 49 haben hier jeweils eine theoretische Mittellinie 74 bzw. 44. Beide Mittellinien 44, 74 sind z.B. deckungsgleich und zudem parallel zur Rotationsachse 5 des Kupplungssystems orientiert.

Figur 2a zeigt einen dem Ausschnitt aus Figur 2 entsprechenden Ausschnitt eines anderen Ausführungsbeispiels eines erfindungsgemäßen Kupplungssystems. Dabei handelt es sich wieder um eine Doppelwellenkupplung, welche, abgesehen von den in der Figur 2a erkennbaren Unterschieden, gleich ausgeführt ist wie die in der Figur 1 dargestellte. Einander entsprechende Bauteile sind daher mit gleichen Bezugszeichen versehen.

Im Gegensatz zu dem Kupplungssystem aus Figur 2 sind bei demjenigen aus Figur 2a die Ausnehmungen 249 radial von dem entsprechenden Lamellenpaket 55 beabstandet angeordnet. Die Betätigung der Kupplung durch Aneinanderpressen der Außenlamellen 56 und der Innenlamellen 57 des Lamellenpakets 55 erfolgt wiederum mittels eines Kraftübertragungselements, welches vorliegend aus einer Scheibe 201, Fingern 202 und einem Druckring 203 gebildet ist. In dem dargestellten Ausführungsbeispiel sind die Finger 202 und der Druckring einstückig ausgeführt und die Finger 202 mit der Scheibe 201 fest verbunden, beispielsweise mittels Schweißen.

Beim Betätigen der Kupplung wird die Scheibe mit einer in der Figur 2a nach rechts wirkenden Axialkraft beaufschlagt, welche diese auf die mit ihr verbundenen Finger 202 überträgt. Infolgedessen wird die Kraft mittels der Finger 202 durch die Ausnehmungen 249 hindurch auf den Druckring 203 übertragen, welcher sie seinerseits auf die Außenlamelle 56 überträgt. Als Rückstellelement sind im Gegensatz zu der Ausgestaltungsvariante der Figur 2 im Ausführungsbeispiel der Figur 2a Schraubenfedern 204 vorgesehen, welche bevorzugt umfänglich verteilt sind.

Die Ausnehmungen 249 sind wie im Falle der Figur 2 in dem ersten Außenlamellenträger 240 vorgesehen und zudem, wie bereits erwähnt, radial beabstandet von dem ersten Lamellenpaket 55 angeordnet. Wie an der Anordnung des Lamellentragabschnittes 158 erkennbar ist, sind die Ausnehmungen 249 zudem radial beabstandet von dem radial innen liegenden Lamellenpaket 155 angeordnet. Somit sind die Ausnehmungen radial in einem Bereich zwischen den Lamellenpaketen 55 und 155 vorgesehen.

Die Finger 202 haben analog den Fingern 70 eine theoretische Mittellinie 205. Diese Mittellinie 205 ist auch im Fall der Figur 2a parallel zur Rotationsachse 5 des Kupplungssystems orientiert.

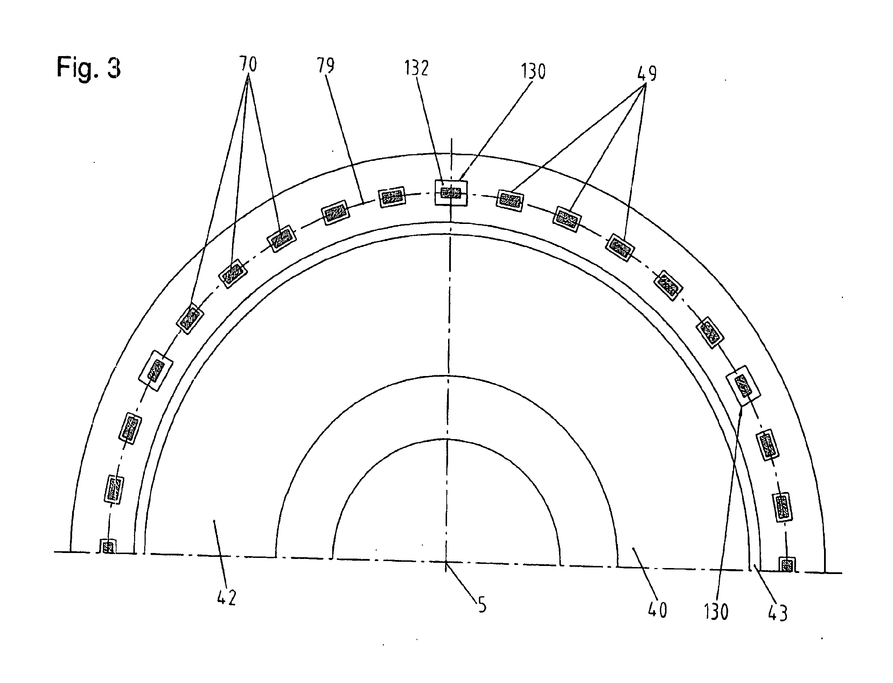

Figur 3 zeigt - teilweise nur schematisch - eine äußere Stirnflächenteilansicht des ersten Außenlamellenträgers 40. In dem ersten Außenlamellenträger 40 sind eine Vielzahl von Ausnehmungen 49 angeordnet. Die Ausnehmungen 49 sind beispielsweise rechteckige Ausstanzungen, deren jeweiligen Flächenschwerpunkte auf einem Kreis 79 liegen. Der Mittelpunkt des Kreises 79 liegt auf der Rotationsachse 5. Die Ausnehmungen haben hier ein Längen-Breiten-Verhältnis von 2:1. Die langen Seitenkanten der Ausnehmungen 49 bilden Tangenten zu Kreisen, die gegenüber dem Kreis 79 konzentrisch sind. Die Ausnehmungen 49 sind äquidistant geteilt.

Z.B. mittig in den Ausnehmungen 49 sind die hier geschnitten dargestellten Finger 70 angeordnet. Keine der Finger 70 berührt die von ihr durchdrungene Ausnehmung 49. Im Ausführungsbeispiel hat jede sechste Ausnehmung 49 eine Ausnehmungsverstärkung 130, vgl. auch Figur 2. Theoretisch muss zum Gewährleisten der Rotationsmitnahme nur eine Finger seine Ausnehmung kontaktieren.

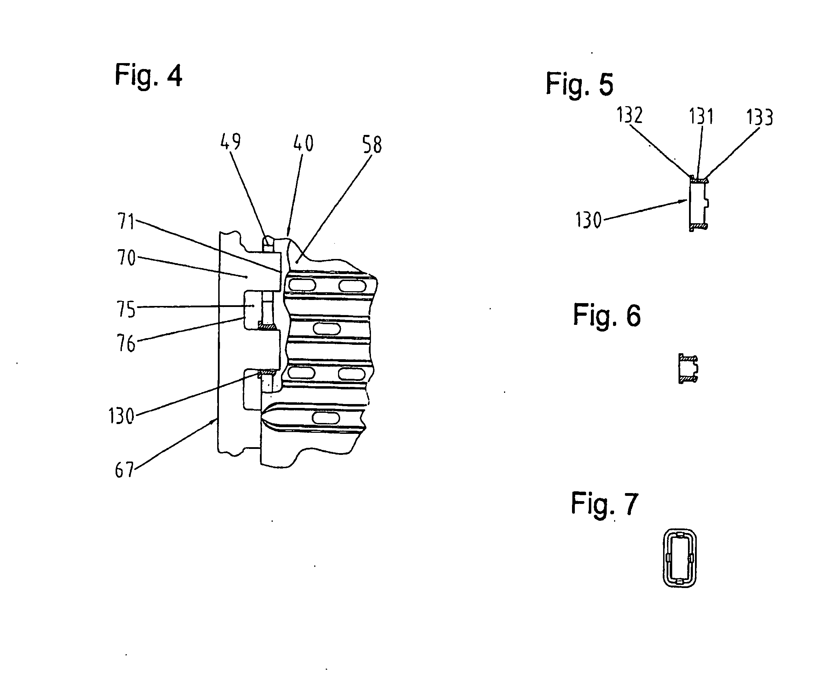

In Figur 4 wird gezeigt, wie die Finger 70 die jeweiligen Ausnehmungen 49 durchdringen. Dazu sind der Fingerbereich des Kraftübertragungsabschnitts 67 und der Ausnehmungsbereich des ersten Außenlamellenträgers 40 abgewickelt dargestellt. Die Blickrichtung ist auf die Außenseite des Lamellentragabschnitts 58 gerichtet. Der mittlere Finger 70 steckt in einer Ausnehmung 49, in der eine Ausnehmungsverstärkung 130 eingeclipst ist.

Eine derartige Ausnehmungsverstärkung 130 ist in den Figuren 5 bis 7 dargestellt. Sie ist z.B. ein geschlossener Vierkantring, der aus zwei Abschnitten besteht: einem Rohrabschnitt 131 und einem daran anschließenden Flanschringabschnitt 132. Der Rohrabschnitt hat an seinem freien Ende pro Seite einen Widerhaken 133. Nach Figur 4 hintergreifen die von der Seite des Ringkolbens 61 aus eingesteckten Ausnehmungsverstärkungen 130 die Innenwandung 41 des ersten Außenlamellenträgers 40. Die Ausnehmungsverstärkung 130 hat gegenüber der Ausnehmung 49 ein geringeres Spiel als gegenüber dem Finger 70. Die Rückseite des ersten Außenlamellenträgers 40 ist in Figur 7 dargestellt, während die Vorderseite in der Figur 3 zu erkennen ist.

Nur beispielhaft sind in Figur 3 zwischen einzelnen Ausnehmungen 49 und Fingern 70 Ausnehmungsverstärkungen 130 angeordnet. Ggf. kann anstelle der jeweiligen Ausnehmungsverstärkung 130 auch die jeweils spezielle Ausnehmung 49 so klein gestaltet werden, dass der dazu gehörende Finger 70 dort mit geringem Spiel geführt ist.

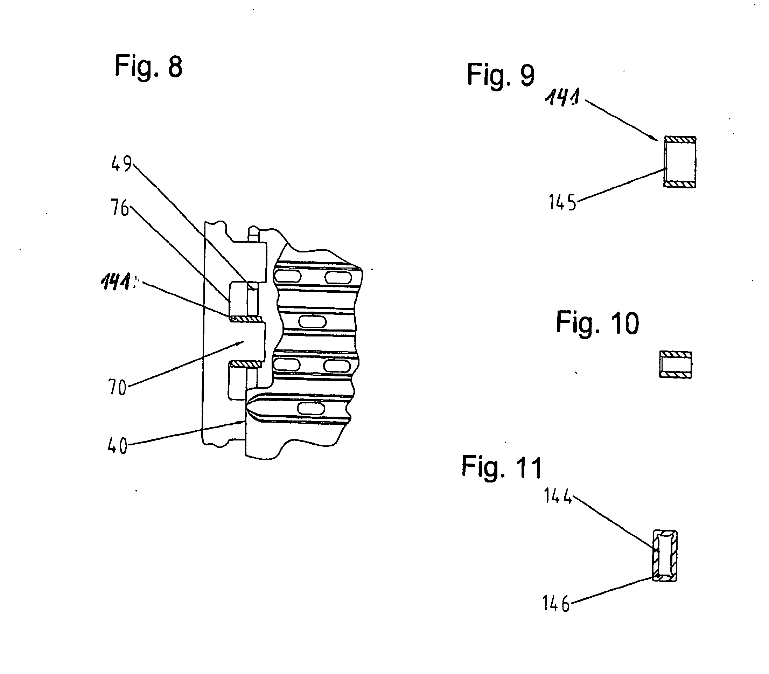

Die Figur 8 zeigt eine weitere Variante der Kontaktgestaltung zwischen Fingern und Ausnehmungen. Hier werden einzelne Finger 70 mit einer - dort mit Klemmsitz sitzenden - Ummantelung 141 ausgestattet. Die Ummantelung 141 ist in den Figuren 9 bis 11 dargestellt. Sie ist im Prinzip ein Vierkantrohr mit einer einseitigen Anfasung 145 der Bohrung 144. Die Anfasung 145 ist zum Lückengrund 76 hin orientiert. Um beispielsweise eine enge Anlage an dem tragenden Finger 70 zu erreichen, sind im Bereich der Bohrungskanten jeweils Innenkantenausrundungen 146 angeordnet. Die Ummantelung 141 hat gegenüber dem Finger 70 ein geringeres Spiel als gegenüber der Ausnehmung 49.

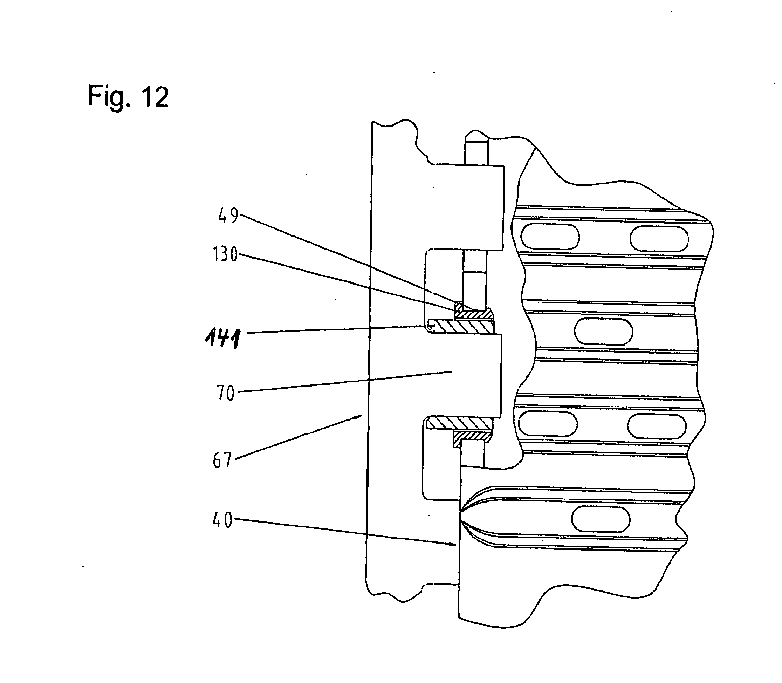

In einer dritten Variante, vgl. Figur 12, werden die Varianten der Figuren 4 und 8 kombiniert. Dazu wird in die Ausnehmung 49 eine Ausnehmungsverstärkung 130 eingebaut und auf den entsprechenden Finger 70 eine Ummantelung geklemmt, geklebt oder ggf. auch an möglichen Fingerkerben verrastet. Die Relativbewegung zwischen den Bauteilen 67 und 40 erfolgt in der Trennfuge zwischen der Ausnehmungsverstärkung 130 und der Ummantelung 141.

Die Ausnehmungsverstärkungen 130 und die Ummantelungen 141 sind beispielsweise aus einem Polyamid, z.B. Ultramid^{®}, hergestellt.

Mit den Teilen 130 und/oder 141 wird mindestens ein Führungselement geschaffen, das einerseits die Passqualität an der Kontaktstelle 67/40 gewährleistet und andererseits ein gegenseitiges Einschlagen der Blechteile unter Bildung sog. Hammerringe verhindert. Durch ein Verwenden der Teile 130 und/oder 141 erübrigt sich zudem eine spezielle Oberflächenbehandlung der Kontaktstellen 67/49. Die aus gleitfähigem Kunststoff gefertigten Ummantelungen 141 bzw. Ausnehmungsverstärkungen 130 verbessern die axiale Gleitfähigkeit des Kraftübertragungsabschnittes. Dies vermeidet erhöhte Hysteresewerte bei jedem Lastwechsel.

### Bezugszeichenliste

- 1: Trockenraum; Getriebebereich, trocken
- 2: Getrieberaum, Getriebenassraum
- 3: Zweimassenschwungrad, Schwungrad
- 5: Rotationsachse des Kupplungssystems
- 10: Getriebegehäuse, Gehäuseglocke
- 11: Trennwand
- 20: Kupplungseingangswelle
- 21: Wellen-Naben-Verbindung
- 22: Mitnehmerscheibensitz
- 24: Bohrung, zentral
- 30: Mitnehmerscheibe
- 39: Abstand zwischen (55) und (41)
- 40: erster Außenlamellenträger, Kupplungsbauteil
- 41: Innenwandung von (40)
- 42: Außenwandung von (40)
- 43: Sicke, Sickenerhebung
- 44: Mittellinie
- 45: Ringzylinder
- 46: Innenraum
- 47: Hauptnabe
- 48: Zylinderaußenwand
- 49: Ausnehmungen für (70)
- 50: erste Reibkupplung, Kupplung
- 51: erste Getriebeeingangswelle
- 52: Wellen-Naben-Verbindung
- 53: erster Lamellenträgerflansch
- 54: erster Innenlamellenträger
- 55: Lamellenpaket
- 56: Außenlamellen
- 57: Innenlamellen
- 58: Lamellentragabschnitt, außen
- 59: Anschlag, Anschlagring
- 60: erstes Stellglied
- 61: erster Ringkolben, Kolben
- 62: Kolbenabschnitt
- 67: Kraftübertragungsabschnitt
- 70: Finger
- 71: Fingerstirnfläche
- 73: Fingerlänge
- 74: Mittellinie
- 75: Lücke
- 76: Lückengrund
- 79: Kreis, auf dem (44) und (74) liegen
- 80: erster Arbeitsraum
- 90: erster Ausgleichsraum
- 99: Rückraum
- 100: Membranfeder, Tellerfeder, Rückstellelement
- 130: Ausnehmungsverstärkung, Clip
- 131: Rohrabschnitt
- 132: Flanschringabschnitt
- 133: Rasthaken
- 140: zweiter Außenlamellenträger, Kupplungsbauteil
- 141: Ummantelung, Hülse
- 144: Bohrung
- 145: Anfasung
- 146: Innenkantenausrundungen
- 150: zweite Reibkupplung, Kupplung
- 151: zweite Getriebeeingangswelle
- 152: Wellen-Naben-Verbindung
- 153: zweiter Lamellenträgerflansch
- 154: zweiter Innenlamellenträger
- 155: Lamellenpaket
- 156: Außenlamellen
- 157: Innenlamellen
- 158: Lamellentragabschnitt, innen
- 160: zweites Stellglied
- 161: zweiter Ringkolben, Kolben
- 162: Kolbenabschnitt
- 167: Betätigungsabschnitt
- 180: zweiter Arbeitsraum
- 181: Zylinderring
- 190: Ausgleichsraum
- 191: Ausgleichsraumbegrenzungswandung
- 200: Federelemente, Rückholfedern, Schraubenfedern
- 201: Scheibe
- 202: Finger
- 203: Druckring
- 204: Schraubenfeder, Rückstellelement
- 205: Mittellinie
- 240: Kupplungsbauteil, erster Außenlamellenträger
- 249: Ausnehmungen

## Patentansprüche

1. Kupplungssystem für Kraftfahrzeugantriebe mit einer Kupplungseingangswelle (20) und mindestens einer Getriebeeingangswelle (51, 151),
- wobei die Getriebeeingangswelle (51, 151) über eine im Getrieberaum (2) gelegene mit Lamellenpaketen (55, 155) ausgestattete Reibkupplung (50, 150) mit der Kupplungseingangswelle (20) verbunden ist und
- wobei mindestens ein Lamellenpaket (55, 155) über ein von einem Stellglied (60, 160) bewegbares Kraftübertragungselement (67) zum Einkuppeln gegen einen Anschlag (59) gepresst wird,
- wobei mindestens ein Kupplungsbauteil (40) der Reibkupplung (50, 150) im Bereich des entsprechenden Lamellenpaketes (55, 155) eine Vielzahl von Ausnehmungen (49) hat und
- wobei das Kraftübertragungselement (67) eine Vielzahl von Fingern (70) aufweist, die durch die Ausnehmungen (49) hindurch auf das entsprechende Lamellenpaket (55, 155) wirken,
**dadurch gekennzeichnet, dass**
mindestens eine von einem Finger (70; 202) durchdrungene Ausnehmung (49; 249) eine Ausnehmungsverstärkung (130) aufweist oder/und
mindestens ein Finger (70; 202) in einem Bereich eine Ummantelung (141) aufweist, der die entsprechende Ausnehmung (49) durchdringt.

2. Kupplungssystem für Kraftfahrzeugantriebe mit einer Kupplungseingangswelle (20) und mindestens einer Getriebeeingangswelle (51, 151),
- wobei die Getriebeeingangswelle (51, 151) über eine im Getrieberaum (2) gelegene mit Lamellenpaketen (55, 155) ausgestattete Reibkupplung (50, 150) mit der Kupplungseingangswelle (20) verbunden ist und
- wobei mindestens ein Lamellenpaket (55, 155) über ein von einem Stellglied (60, 160) bewegbares Kraftübertragungselement (67) zum Einkuppeln gegen einen Anschlag (59) gepresst wird,
- wobei mindestens ein Kupplungsbauteil (240) der Reibkupplung (50, 150) in einem Bereich, welcher radial von den Lamellenpaketen (55, 155) beabstandet ist, eine Vielzahl von Ausnehmungen (249) hat und
- wobei das Kraftübertragungselement (201, 202, 203) eine Vielzahl von Fingern (202) aufweist, mittels welcher eine Kraft durch die Ausnehmungen (249) hindurch auf das entsprechende Lamellenpaket (55, 155) übertragbar ist,
**dadurch gekennzeichnet, dass**
mindestens eine von einem Finger (70; 202) durchdrungene Ausnehmung (49; 249) eine Ausnehmungsverstärkung (130) aufweist oder/und
mindestens ein Finger (70; 202) in einem Bereich eine Ummantelung (141) aufweist, der die entsprechende Ausnehmung (49) durchdringt.

3. Kupplungssystem nach Anspruch 2, **dadurch gekennzeichnet, dass** wenigstens zwei Lamellenpakete (55, 155) vorgesehen sind und die Ausnehmungen (249) radial im Bereich zwischen zwei benachbarten Lamellenpaketen (55, 155) angeordnet sind.

4. Kupplungssystem nach mindestens einem der vorangegangenen Ansprüche, **dadurch gekennzeichnet, dass** die Reibkupplung (50, 150) flüssigkeitsgeschmiert und -gekühlt in einem Getriebenassraum (3) angeordnet ist.

5. Kupplungssystem nach mindestens einem der vorangegangenen Ansprüche, **dadurch gekennzeichnet, dass** das Kupplungsbauteil (40; 240) ein Außenlamellenträger ist.

6. Kupplungssystem nach mindestens einem der vorangegangenen Ansprüche, **dadurch gekennzeichnet, dass** jede Ausnehmung (49; 249) oder/und jeder Finger (70; 202) eine theoretische Mittellinie (44; 74; 205) aufweist, die parallel zur Rotationsachse (5) der Getriebeeingangswellen (51, 151) positioniert ist.

7. Kupplungssystem nach mindestens einem der vorangegangenen Ansprüche, **dadurch gekennzeichnet, dass** alle Finger (70; 202) auf einem Kreis (79) in äquidistantem Abstand angeordnet sind.

8. Kupplungssystem nach mindestens einem der vorangegangenen Ansprüche, **dadurch gekennzeichnet, dass** die einzelne Ausnehmung (49; 249) einen rechteckigen Querschnitt hat.

9. Kupplungssystem nach mindestens einem der vorangegangenen Ansprüche, **dadurch gekennzeichnet, dass** der einzelne Finger (70; 202) einen rechteckigen Querschnitt hat.

10. Kupplungssystem nach mindestens einem der vorangegangenen Ansprüche, **dadurch gekennzeichnet, dass** die Finger (70; 202) eine Länge haben, die mindestens 20% größer ist als der Hub des Kraftübertragungsabschnitts (67).

11. Kupplungssystem nach mindestens einem der vorangegangenen Ansprüche, **dadurch gekennzeichnet, dass** ein ummantelter Finger (70; 202) eine ausnehmungsverstärkte Ausnehmung (130) durchdringt.

12. Kupplungssystem nach mindestens einem der vorangegangenen Ansprüche, **dadurch gekennzeichnet, dass** die Ummantelung (141) und/oder die Ausnehmungsverstärkung (130) jeweils aus einem Duromer, Plastomer oder Elastomer gefertigt ist.

13. Kupplungssystem nach mindestens einem der vorangegangenen Ansprüche, **dadurch gekennzeichnet, dass** der Werkstoff der Ummantelung (141) und/oder der Ausnehmungsverstärkung (130) ein Polyamid ist.

## Claims

1. Clutch system for motor vehicle drives, having a clutch input shaft (20) and at least one gearbox input shaft (51, 151),
- the gearbox input shaft (51, 151) being connected to the clutch input shaft (20) via a friction clutch (50, 150), situated in the gearbox chamber (2) and equipped with clutch disc packs (55, 155),
- at least one clutch disc pack (55, 155) being pressed by a power-transmitting element (67), moveable by an actuator (60, 160), towards a stop (59) for engagement,
- at least one clutch component (40) of the friction clutch (50, 150) having a plurality of openings (49) in the area of the corresponding clutch disc pack (55, 155) and
- the power-transmitting element (67) comprising a plurality of fingers (70), which act on the corresponding clutch disc pack (55, 155) through the openings (49),
**characterized in that**
at least one opening (49; 249), through which a finger (70; 202) passes, comprises an opening reinforcement (130) or/and
at least one finger (70; 202) comprises a casing (141) in an area which passes through the corresponding opening (49).

2. Clutch system for motor vehicle drives, having a clutch input shaft (20) and at least one gearbox input shaft (51, 151),
- the gearbox input shaft (51, 151) being connected to the clutch input shaft (20) via a friction clutch (50, 150), situated in the gearbox chamber (2) and equipped with clutch disc packs (55, 155),
- at least one clutch disc pack (55, 155) being pressed by a power-transmitting element (67), moveable by an actuator (60, 160), towards a stop (59) for engagement,
- at least one clutch component (240) of the friction clutch (50, 150) having a plurality of openings (249) in an area that is radially separated from the clutch disc packs (55, 155) and
- the power-transmitting element (201, 202, 203) comprising a plurality of fingers (202), which serve to transmit a force to the corresponding clutch disc pack (55, 155) through the openings (249),
**characterized in that**
at least one opening (49; 249), through which a finger (70; 202) passes, comprises an opening reinforcement (130) or/and
at least one finger (70; 202) comprises a casing (141) in an area which passes through the corresponding opening (49).

3. Clutch system according to Claim 2, **characterized in that** at least two clutch disc packs (55, 155) are provided and the openings (249) are arranged radially in the area between two adjacent clutch disc packs (55, 155).

4. Clutch system according to at least one of the preceding claims, **characterized in that** the friction clutch (50, 150), liquid lubricated and cooled, is arranged in a gearbox wet chamber (3).

5. Clutch system according to at least one of the preceding claims, **characterized in that** the clutch component (40; 240) is an outer disc carrier.

6. Clutch system according to at least one of the preceding claims, **characterized in that** each opening (49; 249) or/and each finger (70; 202) has a theoretical centre line (44; 74; 205), which is positioned parallel to the axis of rotation (5) of the gearbox input shafts (51, 151).

7. Clutch system according to at least one of the preceding claims, **characterized in that** all fingers (70; 202) are arranged on a circle (79) at equidistant intervals.

8. Clutch system according to at least one of the preceding claims, **characterized in that** the individual opening (49; 249) has a rectangular cross section.

9. Clutch system according to at least one of the preceding claims, **characterized in that** the individual finger (70; 202) has a rectangular cross section.

10. Clutch system according to at least one of the preceding claims, **characterized in that** the fingers (70; 202) have a length which is at least 20% greater than the stroke of the power-transmitting portion (67).

11. Clutch system according to at least one of the preceding claims, **characterized in that** an encased finger (70; 202) passes through an opening-reinforced opening (130).

12. Clutch system according to at least one of the preceding claims, **characterized in that** the casing (141) and/or the opening reinforcement (130) is in each case produced from a duromer, plastomer or elastomer.

13. Clutch system according to at least one of the preceding claims, **characterized in that** the material of the casing (141) and/or the opening reinforcement (130) is a polyamide.

## Revendications

1. Système d'embrayage pour entraînements de véhicules automobiles, comprenant un arbre d'entrée d'embrayage (20) et au moins un arbre d'entrée de boîte de vitesses (51, 151),
- l'arbre d'entrée de boîte de vitesses (51, 151) étant connecté par le biais d'un embrayage à friction (50, 150) disposé dans l'espace de la boîte de vitesses (2) et muni de paquets de disques (55, 155) à l'arbre d'entrée d'embrayage (20) et
- au moins un paquet de disques (55, 155) étant pressé en vue de l'embrayage contre une butée (59) par le biais d'un élément de transfert de force (67) pouvant être déplacé par un actionneur (60, 160),
- au moins un composant d'embrayage (40) de l'embrayage à friction (50, 150) ayant dans la région du paquet de disques correspondant (55, 155) une pluralité d'évidements (49) et
- l'élément de transfert de force (67) présentant une pluralité de doigts (70) qui agissent à travers les évidements (49) sur le paquet de disques correspondant (55, 155),
**caractérisé en ce**
**qu'**au moins un évidement (49 ; 249) traversé par un doigt (70 ; 202) présente un renforcement d'évidement (130) et/ou
en ce qu'au moins un doigt (70 ; 202) présente dans une région un gainage (141) qui traverse l'évidement correspondant (49).

2. Système d'embrayage pour entraînements de véhicules automobiles, comprenant un arbre d'entrée d'embrayage (20) et au moins un arbre d'entrée de boîte de vitesses (51, 151),
- l'arbre d'entrée de boîte de vitesses (51, 151) étant connecté par le biais d'un embrayage à friction (50, 150) disposé dans l'espace de la boîte de vitesses (2) et muni de paquets de disques (55, 155) à l'arbre d'entrée d'embrayage (20) et
- au moins un paquet de disques (55, 155) étant pressé en vue de l'embrayage contre une butée (59) par le biais d'un élément de transfert de force (67) pouvant être déplacé par un actionneur (60, 160),
- au moins un composant d'embrayage (240) de l'embrayage à friction (50, 150), dans une région qui est espacée radialement des paquets de disques (55, 155), ayant une pluralité d'évidements (249) et
- l'élément de transfert de force (201, 202, 203) présentant une pluralité de doigts (202) au moyen desquels une force peut être transmise à travers les évidements (249) au paquet de disques correspondant (55, 155),
**caractérisé en ce**
**qu'**au moins un évidement (49 ; 249) traversé par un doigt (70 ; 202) présente un renforcement d'évidement (130) et/ou
en ce qu'au moins un doigt (70 ; 202) présente dans une région un gainage (141) qui traverse l'évidement correspondant (49).

3. Système d'embrayage selon la revendication 2, **caractérisé en ce qu'**au moins deux paquets de disques (55, 155) sont prévus et les évidements (249) sont disposés radialement dans la région entre deux paquets de disques adjacents (55, 155).

4. Système d'embrayage selon au moins l'une quelconque des revendications précédentes, **caractérisé en ce que** l'embrayage à friction (50, 150) est lubrifié et refroidi par liquide et est disposé dans un espace humide (3) de la boîte de vitesses.

5. Système d'embrayage selon au moins l'une quelconque des revendications précédentes, **caractérisé en ce que** le composant d'embrayage (40 ; 240) est un support de disques extérieurs.

6. Système d'embrayage selon au moins l'une quelconque des revendications précédentes, **caractérisé en ce que** chaque évidement (49 ; 249) et/ou chaque doigt (70 ; 202) présente une ligne médiane théorique (44 ; 74 ; 205), qui est positionnée parallèlement à l'axe de rotation (5) des arbres d'entrée de boîte de vitesses (51, 151).

7. Système d'embrayage selon au moins l'une quelconque des revendications précédentes, **caractérisé en ce que** tous les doigts (70 ; 202) sont disposés sur un cercle (79) de manière équidistante.

8. Système d'embrayage selon au moins l'une quelconque des revendications précédentes, **caractérisé en ce que**
l'évidement individuel (49 ; 249) a une section transversale rectangulaire.

9. Système d'embrayage selon au moins l'une quelconque des revendications précédentes, **caractérisé en ce que** le doigt individuel (70 ; 202) a une section transversale rectangulaire.

10. Système d'embrayage selon au moins l'une quelconque des revendications précédentes, **caractérisé en ce que** les doigts (70 ; 202) ont une longueur qui est au moins supérieure de 20 % à la course de la portion de transfert de force (67).

11. Système d'embrayage selon au moins l'une quelconque des revendications précédentes, **caractérisé en ce qu'**un doigt gainé (70 ; 202) traverse un évidement (130) muni d'un renforcement d'évidement.

12. Système d'embrayage selon au moins l'une quelconque des revendications précédentes, **caractérisé en ce que** le gainage (141) et/ou le renforcement d'évidement (130) sont fabriqués à chaque fois à partir d'un duromère, d'un plastomère ou d'un élastomère.

13. Système d'embrayage selon au moins l'une quelconque des revendications précédentes, **caractérisé en ce que** le matériau du gainage (141) et/ou du renforcement d'évidement (130) est un polyamide.
